# EUROPEAN PATENT SPECIFICATION

(11) **EP 0 988 609 B1**
(45) Date of publication and mention of the grant of the patent: **11.09.2002**
(21) Application number: 98928441.9
(22) Date of filing: 10.06.1998
(51) Int. Cl.: G06F 17/60, G06F 17/21

(54) **METHOD OF AND SYSTEM FOR CREATING DOCUMENTS**
VERFAHREN UND SYSTEM ZUM ERSTELLEN VON DOKUMENTEN
PROCEDE ET SYSTEME DE CREATION DE DOCUMENTS

(30) Priority: 10.06.1997 GB 9712050
(43) Date of publication of application: 29.03.2000
(73) Proprietor: Documents Limited, Guernsey, St. Peter Port, Channel Islands GY1 40H (GB)
(72) Inventor: WOODCOCK, Ian, Patrick, Eastbourne, Sussex BN24 5PA (GB)
(74) Representative: Barnard, Eric Edward
(86) International application number: GB9801689
(87) International publication number: WO98057284

(56) References cited:
- EP-A- 0 376 695
- US-A- 4 954 699
- US-A- 5 272 623

## Description

### TECHNICAL FIELD

The present invention relates to a method of, and a system for, the creation of document information usable to create documents.

More particularly the invention is concerned with a method and system for creation of unique document information by the continuous interaction between questions presented on a computer display and answers inputted by a keyboard and/or chosen by a mouse.

### BACKGROUND OF THE INVENTION

In many fields of application, such as the creation of document information for a legal document such as a will or contract, it is not always efficient or convenient for a user to work through a set of predetermined questions some of which may be redundant or need modification depending on the answers to previous questions.

### DISCLOSURE OF THE INVENTION

US-A-5272623 and EP-A-0376695 both describe a method of and apparatus for creating document information using word processing type macros. US-A-5272623 uses simple menu driven logic tests, i.e. Yes or No answers in a set sequence and look-up tables to correlate precedent clauses with inputted answers.

The invention as claimed, provides a method for creation of document information which as is known from US-A-5272623 comprises the steps of presenting on a computer display screen a sequence of dynamically-selected questions from questions stored in a database along with additional stored information representing precedent clauses, inputting answers to the questions displayed on the screen into the computer and automatically modifying the sequence of subsequent questions and/or the nature of subsequent questions displayed on the screen in dependence on the answers given previously, wherein at least some of the answers are each selected from an associated display of possible answers displayed on the screen at least one of which is chosen by a user as the input and one of the possible answers is a default answer which is adopted in the absence of a positive choice. In contrast to US-A-5272623 and in accordance with the invention the step of automatically modifying subsequent questions is effected by interpretative logical argument and branches and the interpretative logical argument and branches is utilized to exclude questions which are not currently relevant because of previous inputted answers and the method further comprises dynamically controlling and altering the visual presentation and display of the questions on the screen, so that the questions are presented in a scrolled sequential manner to build up a continuous questionnaire, and storing the sequence of thus selected questions and answers with the precedent clauses associated with the sequence of questions and answers based on the continuous questionnaire for utilization as the document creating information.

In another aspect the invention provides a system for the creation of document information which as is known from US-A-5272623 comprises means for presenting on a computer display screen a sequence of dynamically selected questions from questions stored in a database which also stores additional information representing precedent clauses and
means for inputting answers to the questions displayed on the screen into the computer, at least some of the answers being selected from an associated display of possible answers displayed on the screen at least one of which is chosen by a user as the input and one of the possible answers is a default answer which is adopted in the absence of a positive choice. In contrast to US-A-5272623 and in accordance with the invention there is provided means for automatically modifying the sequence of subsequent questions and/or the nature of subsequent questions displayed on the screen in dependence on the answers given previously by interpretative logical argument and branches the automatic modifying means additionally acting to exclude questions which are not currently relevant because of previously inputted answers;
means for dynamically controlling and altering the visual presentation and display of questions on the screen so the questions are presented in a scrolled sequential manner to build up a continuous questionnaire;
and means for storing the sequence of selected questions and answers along with the precedent clauses associated with the sequence of questions and answers based on the questionnaire for utilization as the document creating information.

The invention provides a fully dynamic method and system in which the questions do not form an unchanging sequence but instead are modified in an intelligent manner in dependence on the answers that are given. In this way different questions or groups of questions can be presented to different users depending on the answers that are given.

By storing global document information in the database as well as by selecting some of this information as a result of working through the sequence of questions the selected document information can be adapted and used to create a unique document.

The method and system can be embodied in software or partly in software.

### BRIEF DESCRIPTION OF THE DRAWINGS

The invention may be understood more readily, and various other aspects and features of the invention may become apparent from consideration of the following description in conjunction with the accompanying drawings, wherein:-
Figure 1 is a flow chart representing steps performed in the organising and presenting of a series of prompted questions to be answered in the creation of document information in accordance with the invention;
Figure 2 is a flow chart representing steps performed in the automatic display of the document information derived from the interaction between questions and answers; and
Figure 3 is a flow chart representing final steps in the creation of the document information and a document based on this information.

### BEST MODE OF CARRYING OUT THE INVENTION

It is convenient to consider a system for the creation of document information and a document based on this information in accordance with the invention in terms of three main operation sections or modules embodied in software. These operating modules are a question organizer, an automatic display controller and a document creator.

By way of example, the system as described hereinafter can be used to create a legal document, such as a will, with clauses defined under control of the system.

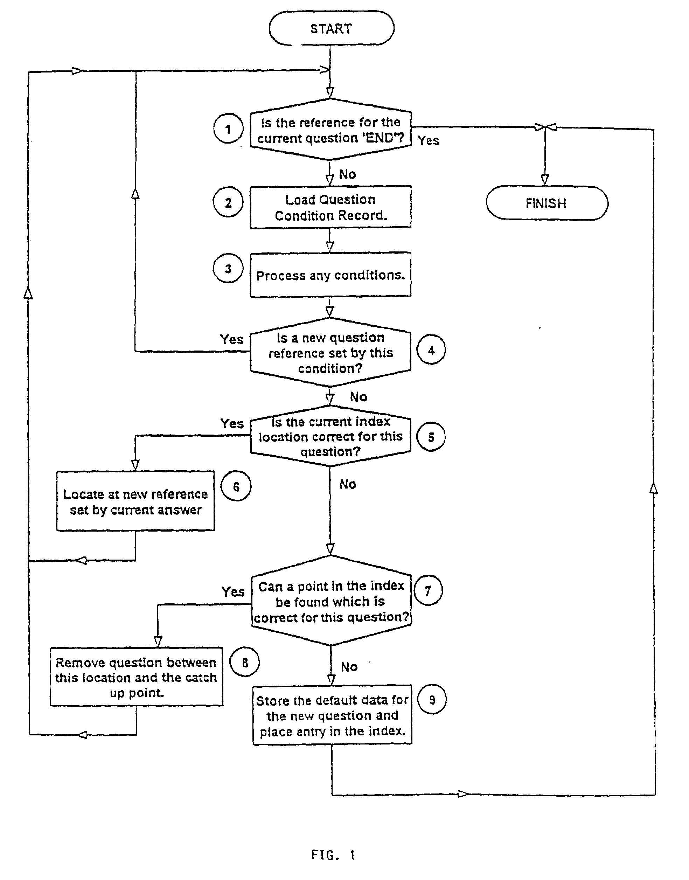

The question organizer represented in Figure 1 allows dynamic alteration of questions depending on the answers which are given. The resulting questionnaire is thus built up stage by stage in a unique fashion based on interaction with a user of the system. The questions are displayed on a display screen of a computer operated by the system and the answers are generated by an associated keyboard or by operation of a mouse to point at a chosen answer. The question organizer uses a database of questions which have artificial intelligence built in via logical statements and branches maintained within the record information for each question.

In the following section of the description the terms used have the following meanings:
- Reference:: An Alfa/numeric identifier for the question.
- Condition:: A set of logical arguments which are used by the questionnaire organiser to decide if the question should be asked or if the system should branch to another question record.
- Question:: The text which will be displayed for the question. This may contain certain formatting controls or variable codes which will include data from the entered questionnaire in the question.
- Answers:: A list of answers made up of an answer letter, an amount of answer text and a goto which will be actioned if the answer is selected. '*'s indicate the possible extent of the user input, in cases where the entered answer requires text. In addition, lists can be defined, either for accessing previously entered information or lists of commonly used text.
- Store:: An alfa/numeric reference for a store in which the decision will be kept. This store name can be accessed by condition logic in later questions. Stores which start with an '_' symbol are used in situations where the question may be asked many times. E.g. in multiple entries such as gifts, lists of assets etc.
- Type:: Answers which may require text input are coded as type '*'; otherwise 'L' is used to denote a Letter response only.
- Default Answer:: The route taken by a default (new) questionnaire follows the direction indicated by the default answers. This letter is the same as one found in the Answers field.
- Default Goto:: Automatically set, this field contains the reference of the question which will follow the current question.

The steps used in the question organizer to process the entries in the database to produce a questionnaire correctly for the specific circumstance involve:
Working through the Questionnaire Database as follows:
   #1
   - Process the Condition for the current question.
   - If the current question is END then build of questions for the current sequence is done, finish.
   - If condition concludes that a branch to another question is required then branch #1.
   - If the current questionnaire index location is correct for this question then branch on the answer for this question, #1.
   - If the system can catch up with this question at some point in the existing sequence index then remove questions between this location and the catch up point. Update the questionnaire index. Branch on the answer for this question #1.
   - Store the default data for this question in the questionnaire index and branch to the default goto for this answer, #1.

This process can be instigated at any point depending on changes made in real time by the user. The reworked question sequence is then dynamically updated on screen presenting the user with new questions or removing now unnecessary questions.

Figure 1 represents the steps used by the question organizer to generate the sequence of questions which will later be displayed using the automatic display controller.

### Step (1) (Process Part 1)

A check is made to test if the process is complete. This is indicated by the arrival of the system to a Question record which has a recognised reference. As a check that the system is correctly arriving at a logical conclusion, a Question with this reference is added to the database of questions. This ensures that the system does not fall down by fault of the questionnaire designer who may, by error, send the system to a question reference which does not exist.

### Step (2)

The Condition portion of each question needs to be checked to see if a logical branch is to be made. If this is the case, then the question will not be asked and this way the system is able to exclude by logical argument sections of the questionnaire which are not relevant. The next step is to load this information from the database into the computer's memory for processing.

### Step (3)

Processing of the Condition is done by an interpretation method. The software code takes each line of logic held in the Condition portion of the question record and looks for logical arguments. The logical arguments are based on variable stores of information taken from within the questionnaire. These stores can be either raw data from the questionnaire or shared data from a previously stored questionnaire such as the system questionnaire which holds general information. Each logical argument performs logical comparisons with either data or constants. The result, if positive, sets the goto location for another question.

### Step (4)

The system then checks the outcome of the logic process through the condition. If this has resulted in a new question reference being set then the process moves back to Step (1)

### Step (5)

Now that the system has decided to enter the current question into the sequence of questions, it may be that the current index data already contains the data for the question based on a previous run through of the question organizer. If this is the case then the system can just continue without setting up a place in the index for this question.

### Step (6)

Subject to Step (5) being true, the system only needs to set the goto as defined by the current stored choice or data for the question as stored in the existing question index information. Then armed with this Goto information, the process can continue by moving back to Step (1).

### Step (7)

If Step (5) has not found the question as stored in the previous run through, then it may be that the question may have occurred at a later point in the previous index. If this is the case, then it is probable that the questions which exist between this point and the location where it can be found are no longer required. This is called a catch up point and if it can be found then it will be better to locate and preserve decisions and data stored at that point. If a catch up point can be found, then Step (8) is processed, otherwise the process moves to Step (9).

### Step (8)

If the catch up point has been located, then all questions between the current question and the catch up point are removed. The system then sets the Goto question reference to that defined for the current stored choice or data for the current question. Then armed with this Goto information, the process can continue by moving back to Step (1).

### Step (9)

Having excluded possible catch up points and the same question at current index location, the system needs to set the details for the new question at the current index location. To ensure that data is preserved, the question information occupying the current location and forward of the current location is moved up to make room for the new question information. The new question is then placed at this point in the index and the Goto reference is set for the default of the new question. The data is then stored as if the choice for this question has been made by the selection of the default. The new Goto is set by the current choice being the default and process continues with Step (1).

### Example:

The following text shows an example of the processes involved in the creation of the questionnaire index of questions to be asked.

A typical questionnaire always starts with a question entry which is used purely to provide an introduction of the questions to follow. This question is known as a Note and requires no input from the user. All questionnaires in this system start with the first entry in the questionnaire knowledge base and this always carries the reference IN2.

The condition for this question is always empty and therefore the question will always be included in the questionnaire:

The answer choices are also limited and a special answer letter of 'N' is used to suppress the requirement for the user to enter any data or make a choice.

Once this default question has been added to the index, the next question reference is set. For example, we are going to ask a question based on the marital status of an individual and, for the sake of this example, we are going to assume that the questionnaire has already been built to the current question on which his/her marital status is to be defined.

The reference for this example question is IN24.

The condition is:-
If ANSIN11 = A Goto IN24A

This condition is being asked because the questions for the status of a male are different to those for a female. The ANSIN11 store contains the choices made in an earlier question in which the 'A' option would have been chosen to select that the person was male. In this case, the question at reference IN24A would be more appropriate and the system would reject the current question and branch to the question at reference IN24A. If, however, the condition fails then the current question 'IN24' will be asked.

In the case where this is the initial build of the questionnaire index, then this reference is added to the index and the default Goto is set by the Goto located for the default answer in the answer field of the question.

If the questionnaire has already had an initial build of the questionnaire index and the data has now changed from either male to female or vice versa, the question index information at the current location is updated with the new reference. The new default Goto is set and the process moves onto the next question reference set by the Goto for the new stored information.

In our example, the question being added would read as follows:-
Question Record:
   **LOSE LINE**
   **Are you?**
Answer Record:
   **A. Single Goto IN25**
   **B. Married Goto IN26**
   **C. A Widow Goto IN25**
   **D. Living as Partners Goto IN25**
Default Answer:
   **A**
Store:
   **ANSIN24**

The question contains the 'LOSE LINE' control word which will suppress the question dividing line and the question 'Are you?. Notice that the style of the question has a flow to the possible options. All questions in this system can be worded in a variety of styles making use of the answer options to ensure the question is always clear as to the required information.

It should also be noted that answer option 'B' has a different Goto than the other three possible answers. This ability to branch for each answer adds to the power of the questionnaire.

In the example, the default answer is A so that the next question to be checked for inclusion in the questionnaire index will be IN25.

As each question is added to the index, the system checks to see if the next reference is END. If this is the case, then the questionnaire build process is complete and the system can now create the image of the questionnaire.

The automatic display controller ensures that questions which have been organized by the question organizer can be displayed in an automatic way. The display of these questions does not require any pre-design process and involves:
Working through the questionnaire index:
   - Get the Question information from the database.
   - Modify Question and Answer text to include any data or preset formatting controls.
   - Calculate the area required for the question and all possible answers.
   - Use this information to calculate/design the layout.
   - Obtain a clear question display area.
   - Draw any appropriate heading.
   - Draw the question.
   - Draw the answer, allocating Text input areas, Check box's and
   - List Images.
   - Draw any appropriate footing.
   - Clear any unused resources.
   - Repeat step #1 until visual display is fully utilised.
   - Display questions.
   - Repeat step #1 until designated number of questions have been built.

Note: The scrolling action only requires the mechanism to build the next or last displayable question using the iterative processes in #1.

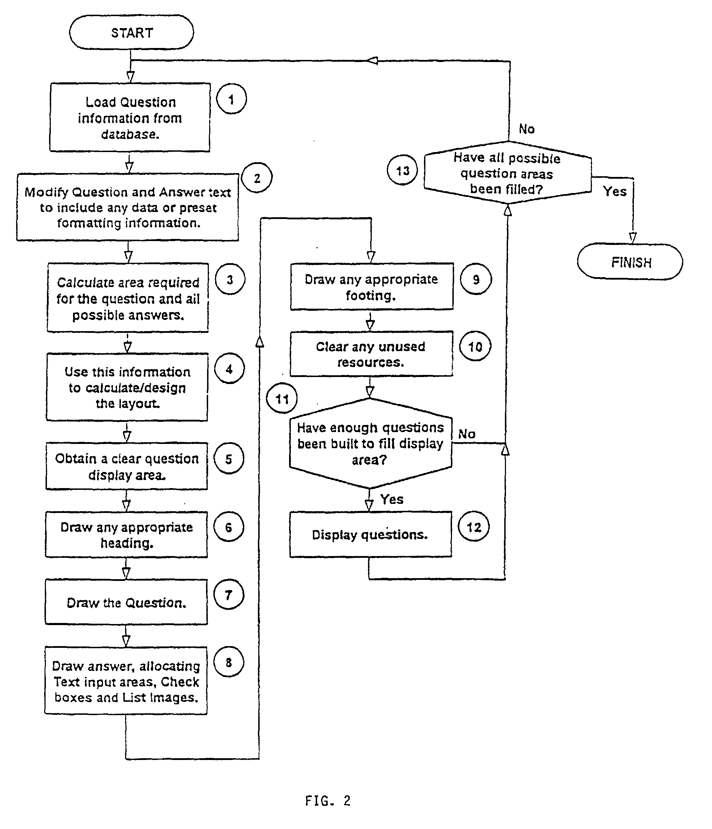

Figure 2 represents the steps used in the automatic display controller which provides an interactive questionnaire on the computer screen which can be printed off.

### Step (1)

The system loads the question information from the database into the computer's memory for the purpose of using the various aspects for the design of the displayed question.

### Step (2)

The information for each question can contain variable definitions for information which will have been entered into a previous question. This information is coded such that the system can recognise the difference between words and stored information references. This process works through the question text and replaces and occurrence of store definitions with the data as entered by the user. The system is also able to adjust this data in many ways to better present the information. For example, in some situations it is better to refer to the entered information by only using the first word entered. In these cases formatting information within the store definition ensures that the data accessed from the stored information is presented in the required way. There are also some character combinations which force the question to have carriage returns and tabs forcing text to be displayed in different ways.

### Step (3)

The next process which needs to be carried out is any pre-working of the layout and size requirements that the final question will need. This is done by a series of tests to decide the best layout for the question with the consideration of best paper/screen usage as well as clarity.

### Step (4)

Each question will contain a combination of elements which will include question text answer text, check boxes, text entry areas and power icons all of which can be described as "entities". This second phase then uses the area calculations set in step (3) to set the location for each property which will be used in the displayed question. This data is then allocated to each of the entities so that they can be allocated for use.

### Step (5)

The questionnaire display is based on a series of images, each of which is used to display a single question including its header or footer (section indicator). The ability for the questionnaire to scroll is based on the principle of taking a definitive number of question display areas and revolving them through a sequence. In this way a movement backwards through the questionnaire would be achieved by taking the last question image and placing it at the front then scrolling to it A forward movement would be the inverse of this. Using this method gives the user the impression that the questionnaire is continuous. This process sets the build to the current free question image.

### Step (6)

Once a free question display item has been allocated then the system decides if the current question belongs to a different section than the previous in the question index. If this is the case then the current question will need to have a heading drawn as well as the question itself. The system draws the question heading and includes a section image if required.

### Step (7)

Now the question is drawn. The information calculated in processes step (3) and step (4) is used to set the location for where the question text is drawn.

### Step (8)

Arrays are set up containing the locations of each entity within the question image which allows for later manipulation of the question by the user.

### Step (9)

The end of the questionnaire is indicated by the presence of a footer similar to the heading. This is drawn as part of the last question created.

### Step (10)

Once the question has been drawn then any spare resources are cleared to ensure efficient use of computer memory.

### Step (11)

In order to ensure a smooth recreation of screen images the system will check, after the creation of each question, to see if the display area can be filled. If this is the case then a screen refresh is performed. Then the rest of the questions, which are out of view, can then be draw out the without the user being aware that the build is still in progress. This also allows the user to carry on reading the questions and making decisions prior to the completion of the rebuild process.

### Step (12)

In the case that Step (11) is true and the display is now full the system generates the displayed image.

### Step (13)

Once each question is created the system checks to see if the series of questions to be displayed is complete. If not then the process continues with step (1).

### Example:

The following test shows an example of the processes involved in the creation of the questionnaire display and
two examples of questions are adopted for display.

The first is a question which requires a choice to be made. This is at the stage where the index has provided the reference for the required question and the question and answer text have been loaded to the computer's memory. From here the first process is to replace any part of the question text which contains store information with the stored information.

The question in the example is asking the user to select whether or not the wife of this person requires comprehensive insurance cover.
Question Record:
   **Does you wife $^ INW require comprehensive insurance cover?**
Answer Record
   **A. Yes Goto 1C20**
   **B. No. Goto DDOI**
Default Answer:
   **B**
Store
   **AIC20**

The store is located by the '$' symbol preceding the store name. This is replaced with the data from the previous question on the name of the wife of this person. This may have the effect of making the question much longer than originally before the name of the wife was added. It is therefore very important that this is done prior to calculating the required layout for this question.

Note: The '^' symbol in our example formats the data retrieved from the previously entered store INW so that only the first word is viewed.

Once all replacements of store information have been carried out the system calculates the length of the displayed items. These will include the question text, (which may occupy more than once line of display area) all answers and possibly some list icon definitions.

In the calculation the system takes into account the display of an answer option being preceded by a graphical check box which will carry the indicator that the option is either selected or not selected.

Once all dimensions have been calculated various layouts are tried to make the best use of the screen or paper when drawing the question.
The first option for the system is to lay both the question and the possible answers in a single line example.
**Does your wife Jane require comprehensive insurance cover? [ ] Yes [X] No**

If it is not possible to display the question in this way, due to the resulting layout exceeding the questionnaire display width, then the system will try several other formats. One such format would be to place the question on one line and the possible answers on the next Example
**Does your wife Jane require comprehensive insurance cover?**
**[ ] Yes [X] No**

Notice that for the sake of clarity, the second example has placed some space between the two possible answers.

For our second example the required input is an amount of text providing an alias for the wife of this person.

The area provided for input has been defined in the answer area as a series of '*' or a number followed by this symbol.
Question Record:
   **LOSE LINE**
   **Is $INW known by any other name which you wish to make reference to?**
Answer Record:
   **A. N/A Goto IN24F**
   **B. "Otherwise known as *x40" Goto IN24F**
Default Answer:
   A
Store:
   **IN26A**

In this example the default answer is 'A' being the not applicable option. This allows for the user to decide not to include the information and ensures that all answers have a positive response.

As with the first example the $INW is replaced in the first instance and prior to the calculation of require question area.

The answer option 'A' being an option if given the same display format as a standard option with the check box image being added before the words.

Option 'B' however, is a good deal more complicated in that the answer is made of three parts. The text preceding the input area, the input area and the text succeeding the input area.

The system calculates the areas required for all three parts of option 'B' and then lays these along with the question text and the option 'A' to again derive the best possible layout. Example.
**Is Jane Thompson known by any other name which you wish to make reference to?**
**"otherwise known as : [X] N/A**

In the example the 'not applicable' option has been placed in the right margin of the question. This is standard for Text/NA type questions where the entry area may be left blank.

The document creation provides document information from a database of precedents using information gained via the intelligent questionnaire. The precedents are included or excluded depending on conditions. These conditions can also effect the flow of precedents being used. Once selected, the resulting text which is included in the finished document is then logically manipulated to include or exclude areas of text. Precedents are then automatically formatted in the style of the required document.

All precedents which are to be accessed by the system are maintained in a database. Each precedent record has an identifying name or reference. This is used as a logical jump point depending on the flow of precedents. Each precedent has a number of fields which contain details relevant to the precedent. In the final section of the description the terms used have the following meanings:
- Reference:: An alfa/numeric Identifier for the precedent
- Condition:: A set of logical arguments which are used by the document build facility to decide if the precedent should be included or if the system should branch to another precedent.
- Precedent:: An amount of text which will be used for the precedent. This may contain certain formatting controls or variable codes which will include data from the entered questionnaire in the precedent.
- Substitution:: A set of logical statements which, if logic dictates, are able to substitute areas of text within the precedent.
- Goto:: The next precedent record which will be accessed after the current precedent has been included.
- Numbering.: A code which dictates if the precedent is one of a group or single. This field is also used to show if certain numbering/formatting controls are required.

In operating the document creator establishes a layout composed of a displayable set of precedents giving the result of a complete formatted document and
Working through the Precedent Database involves as follows:
- Process the Condition for the current precedent.
- If the current precedent is END then build of document is done, finish.
- If the condition concludes that a branch to another precedent is required then branch #1.
- Store the current precedent in the document index.
Method. Work through the document index.
#2
- Load the Precedent for the current document index item
- Process the Substitution for the current precedent.
- Include this in the document, formatting and numbering as per the record.
- Repeat #2 till the end of the document index is reached

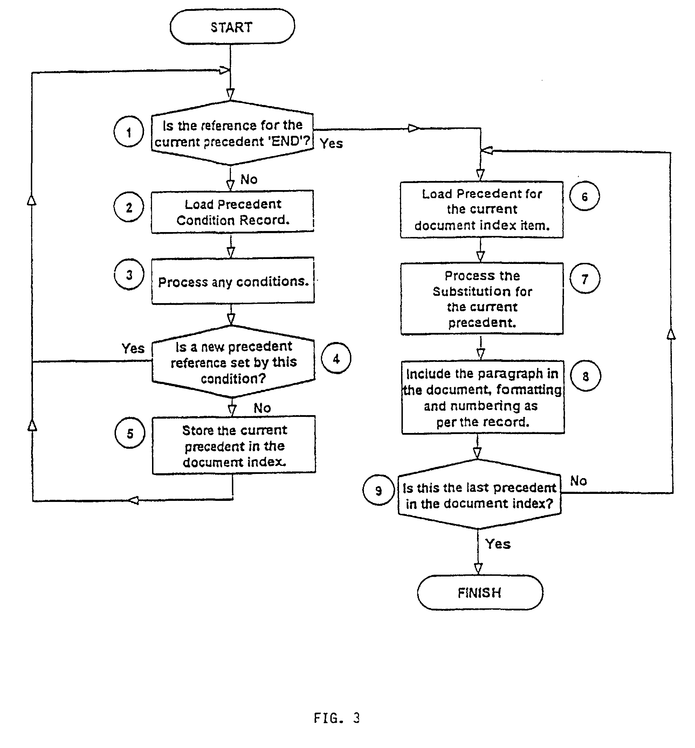

Figure 3 depicts the steps taken by the document creator:

The first part of this process involves the diagnosis as to which of which precedents need to be included.

### Step (1) (Process Part 1)

The first step, which may be repeated, checks if the current precedent is the last in the database. This is achieved by checking for the reference 'END' which indicates the last precedent. It may be that the GOTO for the final precedent is a "null", in which case this is presumed to be the end of the document.

### Step (2)

The Condition portion of each precedent needs to be checked to see if a logical branch is to be made. If this is the case then the precedent will not be included in the document and in this way the system is able to exclude by logical argument sections of the document which are not relevant. The first step is to load this information from the database into the computers memory for processing.

### Step (3)

The processing of conditions is done by an interpretation method. The software code takes each line of logic held in the Condition portion of the precedent record and looks for logical arguments. The logical arguments are based on variable stores of information taken within the questionnaire. These stores can be either raw data from the questionnaire or shared data from a previously stored questionnaire such as the system questionnaire which holds general information. Each logical argument performs logical comparisons with either data or constants. The result, if positive, sets the goto location for another precedent.

### Step (4)

The system the checks the outcome of the logic process throughout the condition. If this has resulted in a new precedent reference being set then the process moves back to step (1).

### Step (5)

Once the system has decided to use a precedent then its reference is added to the document index. This index is created by adding these references one after the other until the end precedent is encountered.

### Step (6) (Process Part 2)

The second process is the creation of the document itself. The index which contains the references of the included precedents is used as the source for precedent reference information. The Precedent text is now loaded along with a set of replacement conditions.

### Step (7)

A process is now performed which tests each statement in the substitution condition. Any positive result causes a text replacement to take place which either removes text or replaces it with new text as defined in the statement. The text to be replace is marked with an open square '[' bracket and the extent of the replacement is that text which falls between the matched text and the next even close ']' square bracket.

### Step (8)

Once all of the replacement statements have been process the resulting paragraph is placed into the document. This is formatted depending on settings defined within for the document and paragraph numbers are added.

### Step (9)

If this is not the last precedent in the index then the process repeats at step (6).

### Example:

This text provides an example of the creation processes involved in the decision to include a precedent.

A precedent will only be included if the condition which precedes it fails to branch to another precedent. Lets suppose that the precedent we require is only valid if the person is Male. The condition may contain a condition which will exclude the precedent in the case of the person then being female.
Condition Record.
   **If ANSIN24 D Goto WP66**
Goto:
   **WP59**

If the answer stored in ANSIN24 was not 'D' then this precedent would be skipped and the precedent at reference WP66 would be processed next.

If the answer stored in ANSIN24 was D' however the precedent reference would be added to the index and the precedent at WP59 would be the next to be processed.

Once all the precedents have been included the next process is to include them into the document text along with replacement of text, numbering and finally formatting.

Our example precedent which is included due to the person being married is as follows:
Condition Record:
   **If ANSIN24** <> **D Goto WP66**
Precedent Record:
   **Gift of Residue» && && 'I give my Estate to [my husband SINHI] [$AND81A and] [subject to [his] surviving me by [30 days] [but if this gift fails then the following provisions shall apply instead]**
Substitution Record.
   **If ANDI2 = A or ANDI2 = B replace [my husband]," my wife $1NW"**
   **If ANDI3 = A or ANDI3 = B replace [my husband]," my intended wife $ANSIN28"**
   **If ANDI4 = A or ANDI4 = B replace [my husband]," my intended husband $^ANSIN28"**
   **If AND8IA = ""replace [$AND8IA],""**
   **If ANSMW74G = C replace [$AND8lA],""**
   **If ANSINII = A and SSEX** <> **B replace [his],"her"**
Numbering:
   **0**
Goto:
   **WP59**

Once all of the required precedent references have been set into the index the process continues with the creation of the document text.

The Precedent record information is read the process of replacing its contents based on the substitution logic takes place. Each positive condition is processed by the seek and replace of matching text within the precedent.

Once this is completed the '$' variables are replaced with data taken from the stored answers in the questionnaire. These can include formatting symbols like 'A' (First Word) to make the document read in the desired way.

This text is then added to the final text document along with numbering information.

Notice that the replacement text items can be embedded allowing for whole areas to be substituted at a time. This powerful logical replacement of text creates a very powerful mechanism indeed.

As each precedent is added the numbering sequence is updated depending on the numbering field format. This may indicate that the paragraph is a Main Sub or Sub
paragraph or in some cases can suppress numbering to achieve the required format for the final document.

Once the process of inclusion, substitution formatting and numbering is complete the document can be displayed stored and/or printed. The storage of document information can be useful where the information is to be transferred electronically to another location as by an on-line inter-net service.

Some specific examples of applications of the invention and documents produced thereby are:
Wills
Powers of Attorney
Self Assessment Tax
Contracts of Employment
Employee Records
Bank Security Documentation
Leasing Documentation
Stress Management
Health & Safety
Insurance Applications
Mortgage Applications

## Claims

1. A method for creation of document information comprising the steps of presenting on a computer display screen a sequence of dynamically-selected questions from questions stored in a database along with additional stored information representing precedent clauses, inputting answers to the questions displayed on the screen into the computer and automatically modifying the sequence of subsequent questions and/or the nature of subsequent questions displayed on the screen in dependence on the answers given previously, wherein at least some of the answers are each selected from an associated display of possible answers displayed on the screen at least one of which is chosen by a user as the input and one of the possible answers is a default answer which is adopted in the absence of a positive choice, **characterized in that** the step of automatically modifying subsequent questions is effected by interpretative logical argument and branches (2-7 Figure 1) and the interpretative logical argument and branches is utilized to exclude questions (8 Figure 1) which are not currently relevant because of previous inputted answers and the method further comprises dynamically controlling and altering the visual presentation and display of the questions on the screen, so that the questions are presented in a scrolled sequential manner to build up a continuous questionnaire (1, 2 Figure 2), and storing the sequence of thus selected questions and answers with the precedent clauses associated with the sequence of questions and answers based on the continuous questionnaire for utilization as the document creating information.

2. A system for creation of document information comprising means for presenting on a computer display screen a sequence of dynamically selected questions from questions stored in a database which also stores additional information representing precedent clauses and
means for inputting answers to the questions displayed on the screen into the computer, at least some of the answers being selected from an associated display of possible answers displayed on the screen at least one of which is chosen by a user as the input and one of the possible answers is a default answer which is adopted in the absence of a positive choice, **characterized by** means (2-7 Figure 1) for automatically modifying the sequence of subsequent questions and/or the nature of subsequent questions displayed on the screen in dependence on the answers given previously by interpretative logical argument and branches the automatic modifying means additionally acting to exclude questions (8 Figure 1) which are not currently relevant because of previously inputted answers;
means for dynamically controlling and altering the visual presentation and display of questions on the screen so that the questions are presented in a scrolled sequential manner to build up a continuous questionnaire (1, 2 Figure 2);
and means for storing the sequence of selected questions and answers along with the precedent clauses associated with the sequence of questions and answers based on the questionnaire for utilization as the document creating information.

## Patentansprüche

1. Verfahren zum Erzeugen von Dokumenteninformationen, umfassend die Schritte des Darstellens auf einem Computeranzeigebildschirm eine Abfolge von dynamisch ausgewählten Fragen aus Fragen, welche in einer Datenbank zusammen mit zusätzlich gespeicherten Informationen, welche Präzedenzsätze repräsentieren, gespeichert sind, des Eingebens von Antworten auf die auf dem Bildschirm dargestellten Fragen in den Computer und das automatische Modifizieren der Abfolge von nachfolgenden Fragen und/oder der Natur von nachfolgenden Fragen, welche auf dem Bildschirm in Abhängigkeit der vorher gegebenen Antworten dargestellt werden, wobei wenigstens einige der Antworten jeweils ausgewählt werden aus einer zugehörigen Anzeige von möglichen Antworten, welche auf dem Bildschirm dargestellt werden, von denen wenigstens eine durch einen Benutzer ausgewählt wird als die Eingabe und eine der möglichen Antworten eine Standardantwort ist, welche übernommen wird in der Abwesendheit von einer positiven Auswahl, **dadurch gekennzeichnet, dass** der Schritt des automatischen Modifizierens von nachfolgenden Fragen bewirkt wird durch interpretative logische Argumente und Verzweigungen (2 - 7 Figur 1) und die interpretativen logischen Argumente und Verzweigungen verwendet werden, um Fragen auszuschließen (8 Figur 1), welche augenblicklich wegen der vorhergehend eingegebenen Antworten nicht relevant sind, und dass das Verfahren weiterhin das dynamische Steuern und Verändern der visuellen Präsentation und Darstellung der Fragen auf dem Bildschirm umfasst, so dass die Fragen in einer den Bildschirminhalt verschiebenden sequenziellen Art und Weise dargestellt werden, um einen kontinuierlichen Fragebogen (1, 2 Figur 2) aufzubauen, und das Speichern der Abfolge von solchen ausgewählten Fragen und Antworten mit den Präzedenzsätzen, welche der Abfolge von Fragen und Antworten zugeordnet werden, basierend auf dem kontinuierlichen Fragebogen, für die Verwendung als die dokumenterzeugenden Informationen.

2. System zum Erzeugen von Dokumentinformationen, umfassend Mittel zum Darstellen auf einem Computeranzeigebildschirm eine Abfolge von dynamisch ausgewählten Fragen aus gespeicherten Fragen, welche in einer Datenbank, welche zudem zusätzliche Informationen speichert, die Präzedenzsätze darstellen, gespeichert sind, und
Mittel zum Eingeben von Antworten auf die auf dem Bildschirm dargestellten Fragen in den Computer, wobei wenigstens einige der Antworten ausgewählt sind aus einer zugehörigen Anzeige von möglichen Antworten, die auf dem Bildschirm dargestellt sind, von denen wenigstens eine durch einen Benutzer als die Eingabe ausgewählt wird und eine der möglichen Antworten eine Standardantwort ist, welche in der Abwesenheit von einer positiven Auswahl übernommen wird, **gekennzeichnet durch** Mittel (2 - 7 Figur 1 ) zum automatischen Modifizieren der Abfolge von nachfolgenden Fragen und/oder der Natur von nachfolgenden Fragen, welche auf dem Bildschirm in Abhängigkeit von den vorher gegebenen Antworten dargestellt werden, **durch** interpretative logische Argumente und Verzweigungen, die automatischen Modifizierungsmittel arbeiten zusätzlich, um Fragen auszuschließen (8 Figur 1), welche augenblicklich wegen der vorhergehend eingegebenen Antworten nicht relevant sind;
Mittel zum dynamischen Steuern und Verändern der visuellen Präsentation und Darstellung der Antworten auf dem Bildschirm, so dass die Fragen in einer den Bildschirminhalt verschiebenden Art und Weise präsentiert werden, um einen kontinuierlichen Fragebogen aufzubauen (1, 2 Figur 2); und Mittel zum Speichern der Abfolge von ausgewählten Fragen und Antworten zusammen mit den Präzedenzsätzen, welche der Abfolge von Fragen und Antworten zugeordnet werden, basierend auf dem Fragebogen, zur Verwendung als die dokumenterzeugenden

## Revendications

1. Procédé de création d'informations de document, comprenant les étapes consistant à présenter, sur un écran d'affichage d'ordinateur, une séquence de questions dynamiquement sélectionnées à partir de questions mémorisées dans une base de données conjointement avec des informations mémorisées additionnelles représentant des clauses précédentes, à entrer, dans l'ordinateur, des réponses aux questions affichées sur l'écran et à modifier automatiquement la séquence des questions subséquentes et/ou la nature des questions subséquentes affichées sur l'écran en fonction des réponses antérieurement apportées, dans lequel au moins certaines des réponses sont sélectionnées chacune à partir d'un affichage associé de réponses possibles affichées sur l'écran dont au moins l'une d'entre elles est choisie par un utilisateur en tant qu'entrée et l'une des réponses possibles est une réponse par défaut qui est adoptée en l'absence d'un choix explicite, **caractérisé en ce que** l'étape consistant à modifier automatiquement les questions subséquentes s'effectue par un argument logique interprétatif et des branches (2-7 figure 1) et l'argument logique interprétatif et les branches sont employés pour exclure des questions (8 figure 1) qui ne sont pas présentement pertinentes en raison des questions entrées antérieures, le procédé comprenant, en outre, une commande et une modification dynamiques de la présentation visuelle et de l'affichage des questions sur l'écran, de telle sorte que les questions sont présentées par défilement séquentiel en constituant un questionnaire continu (1, 2 figure 2), et la mémorisation de la séquence des questions ainsi sélectionnées et des réponses avec les clauses précédentes associées à la séquence des questions et des réponses sur la base du questionnaire continu en vue de leur utilisation en tant qu'informations de création de document.

2. Système de création d'informations de document, comprenant des moyens pour présenter, sur un écran d'affichage d'ordinateur, une séquence de questions dynamiquement sélectionnées à partir de questions mémorisées dans une base de données qui mémorise également des informations additionnelles représentant des clauses précédentes, et
des moyens pour entrer, dans l'ordinateur, des réponses aux questions affichées sur l'écran, au moins certaines des réponses étant sélectionnées à partir d'un affichage associé de réponses possibles affichées sur l'écran dont au moins l'une d'entre elles est choisie par un utilisateur en tant qu'entrée et l'une des réponses possibles est une réponse par défaut qui est adoptée en l'absence d'un choix explicite, **caractérisé par** des moyens (2-7 figure 1) pour modifier automatiquement la séquence des questions subséquentes et/ou la nature des questions subséquentes affichées sur l'écran en fonction des réponses antérieurement apportées par un argument logique interprétatif et des branches, les moyens de modification automatique agissant additionnellement pour exclure des questions (8 figure 1) qui ne sont pas présentement pertinentes en raison des questions antérieurement entrées ;
des moyens pour commander et modifier dynamiquement la présentation visuelle et l'affichage des questions sur l'écran, de telle sorte que les questions sont présentées par défilement séquentiel en constituant un questionnaire continu (1, 2 figure 2) ;
et des moyens pour mémoriser la séquence des questions sélectionnées et des réponses conjointement avec les clauses précédentes associées à la séquence des questions et des réponses sur la base du questionnaire continu en vue de leur utilisation en tant qu'informations de création de document.
